# EUROPEAN PATENT APPLICATION

(11) **EP 3 816 273 A1**
(43) Date of publication of application: **05.05.2021**
(21) Application number: 19827451.6
(22) Date of filing: 04.06.2019
(51) Int. Cl.: C12G 3/02, C12C 5/02

(54) **FERMENTED MALT ALCOHOLIC BEVERAGE AND METHOD FOR PRODUCING SAME**

(30) Priority: 29.06.2018 JP 2018124720
(71) Applicant: Asahi Group Holdings, Ltd., Tokyo 130-8602 (JP); Asahi Breweries, Ltd., Tokyo 130-8602 (JP)
(72) Inventor: HARUNA Kenichiro, Moriya-shi, Ibaraki 302-0106 (JP); OHASHI Takuya, Moriya-shi, Ibaraki 302-0106 (JP)
(74) Representative: Eisenführ Speiser
(86) International application number: PCT/JP2019/022191
(87) International publication number: WO 2020/003923

(57) **Abstract**

A fermented malt alcoholic beverage has a carbohydrate content of 0.5% by mass or less, and comprises 1 ppm or more of hordatine A and 1.0% by mass or more of polydextrose.

## Description

### Technical Field

The present invention relates to a fermented malt alcoholic beverage and a method for producing the same.

### Background Art

Fermented malt alcoholic beverages such as beer are known. Among fermented malt alcoholic beverages, low-carbohydrate beverages and low-calorie beverages have a certain need, targeting health-conscious consumers.

For example, Patent Literature 1 (Published Japanese Translation of PCT International Application No. 2004-536604) describes a low-calorie beer prepared by the step of brewing a mixture containing malt, hops, water, a carbohydrate polymer, and optionally one or more additives.

### Summary of Invention

The present inventors investigated a fermented malt alcoholic beverage having a low carbohydrate content, specifically, a carbohydrate content of 0.5% by mass or less. The low-carbohydrate fermented malt alcoholic beverage has a problem that it is watery. The present inventors studied the increasing of the malt usage ratio (the ratio of malt to all raw materials except water (% by mass)) in order to solve wateriness.

However, it was found that the malt-derived astringency was noticeable when the malt usage ratio was increased. Specifically, as a result of increasing the malt usage ratio, it was found that when the hordatine A, which is a representative ingredient of malt-derived ingredients, exceeded 1 ppm, malt-derived astringency was noticeable.

In view of the above, an object of the present invention is to provide a low-carbohydrate fermented malt alcoholic beverage which can solve wateriness without noticeable astringency, and a method for producing the same.

Patent Literature 1 discloses light beer containing polydextrose as a carbohydrate polymer. However, when the present inventors analyzed "Bud Light (registered trademark)" and "Miller Lite (registered trademark)" described in Examples of Patent Literature 1, the carbohydrate content was estimated to exceed 0.5% by mass. That is, it cannot be said that Patent Literature 1 describes a low-carbohydrate fermented malt alcoholic beverage.

For the purpose of solving the above problems, the present invention includes the following matters.
[1] A fermented malt alcoholic beverage having a carbohydrate content of 0.5% by mass or less, and comprising 1 ppm or more of hordatine A and 1.0% by mass or more of polydextrose.
[2] The beverage according to [1], wherein a concentration of the hordatine A is 20 ppm or less.
[3] The beverage according to [1] or [2], wherein a concentration of the polydextrose is 5% by mass or less.
[4] A method for producing a fermented malt alcoholic beverage containing 1 ppm or more of hordatine A, comprising: preparing and fermenting an aqueous solution of a plant raw material containing malt so that a carbohydrate content is 0.5% by mass or less; and adding 1.0% by mass or more of polydextrose to the aqueous solution.

The present invention provides a low-carbohydrate fermented malt alcoholic beverage which can solve wateriness without noticeable astringency, and a method for producing the same.

### Description of Embodiments

Hereinafter, embodiments of the present invention are described.

A fermented malt beverage according to the present invention has a carbohydrate content of 0.5% by mass or less, and comprises 1 ppm or more of hordatine A and 1.0% by mass or more of polydextrose. By employing such a constitution, it is possible to suppress wateriness in spite of the low carbohydrate content (carbohydrate content is 0.5% by mass or less). In addition, the astringency is suppressed even though hordatine A is contained at 1 ppm or more.

Hereinafter, the beverage according to the present embodiment is described in detail.

### (Fermented Malt Alcoholic Beverage)

In the present invention, the "fermented malt alcoholic beverage" refers to a beverage obtained from a plant raw material containing malt, which is an alcohol-containing beverage obtained through a fermentation process.

The malt includes barley malt, wheat malt, and the like.

The plant raw material that is a raw material may contain ingredients other than malt. Examples of ingredients other than malt include grains other than malt; beans such as rice, corn, and soybeans; and potatoes. More preferably, examples of raw materials other than malt include barley and corn such as corn starch.

The fermented malt beverage preferably contains hops (which may be a hop extract) as a raw material.

The malt usage ratio of the fermented malt alcoholic beverage is not particularly limited, but is, for example, 1 to 66% by mass, and preferably 10 to 50% by mass. Note that, as described above, the malt usage ratio is the ratio (% by mass) of malt to all raw materials except water.

The alcohol percentage of the fermented malt alcoholic beverage is, for example, 1 to 10% by volume, preferably 2 to 8% by volume, and more preferably 3 to 6% by volume.

The raw wort extract of the fermented malt alcoholic beverage is not particularly limited, but can be a value equivalent to that of ordinary beer. The raw wort extract is, for example, 2 to 20% by mass, preferably 3 to 15% by mass, and more preferably 5 to 13% by mass. The raw wort extract can be measured from the alcohol concentration and the extract concentration according to the SCABA (Servo Chem Automatic Beer Analyzer) method that is officially approved as an international law.

The bitterness value of the fermented malt alcoholic beverage is, for example, 5 to 40 B.U., preferably 10 to 25 B.U., and more preferably 15 to 20 B.U.

The bitterness value can be measured according to the EBC (European Brewery Convention) Analytica-EBC standard method.

The pH of the fermented malt alcoholic beverage is, for example, 3.0 to 5.0, preferably 3.3 to 4.7, and more preferably 3.5 to 4.5.

The amino nitrogen concentration of the fermented malt alcoholic beverage is, for example, 0.5 to 20 mg/100 ml, preferably 0.5 to 10 mg/100 ml, and more preferably 1.0 to 5.0 mg/100 ml. The amino nitrogen concentration can be analyzed by, for example, the ninhydrin method (Brewers Association of Japan: Beer Analysis Method, 8.18 (1990)).

### (Hordatine A)

Hordatine A is an ingredient contained in grains such as malt. The concentration of hordatine A in the beverage may be 1 ppm or more, preferably 1 to 20 ppm, and more preferably 1 to 10 ppm.

If the concentration of hordatine A is 1 ppm or more, the wateriness can be reduced even though the beverage has a low carbohydrate content.

The concentration of hordatine A can be controlled by, for example, adjusting the content ratio of the grain-derived ingredients in the raw material, the dilution rate for forming the raw material into an aqueous solution, and the like.

### (Polydextrose)

Polydextrose is a type of dietary fiber. Polydextrose is added to reduce the wateriness without noticeable astringency of the beverage. By adding polydextrose, it is possible to obtain a beverage having a low carbohydrate content and suppressed wateriness.

Note that, in the case of using indigestible dextrin, which is a type of water-soluble dietary fiber as well as polydextrose, wateriness can be suppressed in the same manner, but unpleasant odors such as paper odors are easily noticeable. On the other hand, in the case of using polydextrose, the wateriness of the beverage can be suppressed without noticeable odors.

The content of polydextrose in the beverage may be 1.0% by mass or more, but is preferably 1.0 to 5.0% by mass, more preferably 1.0 to 3.0% by mass, further preferably 1.0 to 2.5% by mass, and most preferably 1.5 to 2.0% by mass.

### (Other Additives)

The fermented malt beverage according to the present invention may contain additives such as dietary fiber other than polydextrose, a pH adjuster, a bittering agent, a sour agent, a sweetener, and a flavor, if necessary. The contents of these additives may be those conventionally used for these additives.

### (Method for Producing Fermented Malt Alcoholic Beverage)

Next, an example of the method for producing a fermented malt alcoholic beverage according to the present embodiment is described.

First, a crushed product of malt is prepared as a raw material. In addition, if necessary, a starch material such as rice or corn starch, a protein or a protein degradation product, and the like as auxiliary materials are mixed with the raw material. Next, warm water is added to the raw material to heat it. Thereby, the raw material is saccharified mainly by the malt enzyme, and the saccharified liquid is obtained as wort. Further, the obtained wort is filtered, and a predetermined amount of polydextrose and, if necessary, other additives are added.

Alternatively, one may use wort obtained by adding malt extract, carbohydrate solution (for example, fructose-glucose solution and the like), polydextrose, and other additives (for example, other dietary fibers, proteins or protein degradation products, pigments such as caramel, bittering agents such as hops, amino acids, and the like) to warm water.

Then, the wort is boiled in a boiling pot. After boiling, the wort is transferred to a settling tank (called whirlpool or the like) to remove precipitates such as hop lees. After removing the precipitates, it is cooled to an appropriate fermentation temperature by a heat exchanger (plate cooler).

After cooling, the wort is inoculated with yeast and fermented. After fermentation, filtration is performed to obtain the fermented malt alcoholic beverage according to the present embodiment.

Note that the timing of adding polydextrose is not necessarily the timing in the above-mentioned example, but may be added at any stage.

### (Experimental Example 1)

Commercially available low-malt beer (commercial product A) was prepared as a fermented malt alcoholic beverage. The carbohydrate content of the commercial product A was 0.5% by mass or less. The concentration of hordatine A of the commercial product A was 2 ppm. The alcohol percentage of the commercial product A was 4% by volume, the raw wort extract was 7%, the bitterness value was 15 B.U., the pH was 3.9, and the amino nitrogen was 2.7 mg/100 ml.

The concentration of hordatine A was analyzed as follows.

After degassing the commercial product A, it was diluted 5 times with water. The diluted beverage was subjected to liquid chromatography under the following conditions to analyze the concentration of hordatine A.
Column: Imtakt 2.0 × 150 mm
Column temperature: 35°C
Flow rate: 0.2 ml/min
A [0.5% formic acid], B [methanol]
0 min (15% B) → 1 min (15% B) → 35 min (40% B)
Ionization mode: ESI pos. m/z 551.1 → 237.1

Polydextrose or indigestible dextrin was added to the commercial product A at different concentrations to obtain beverages according to Samples 1 to 13.

With respect to the obtained beverages, "Paper Odor", "Wateriness", "Astringency", "Light and Refreshing Aftertaste", and "Comprehensive Evaluation" were evaluated by a sensory evaluation by five panelists.

The evaluation criteria were 5 grades presented by the following criteria, and the average value of the scores of 5 well-trained professional panelists was used as the result.

### [Paper Odor]

4 points: extremely strong paper odor.
3 points: strong paper odor.
2 points: paper odor.
1 point: weak paper odor.
0 points: no paper odor.

### [Wateriness]

4 points: very watery.
3 points: quite watery
2 points: watery.
1 point: a little watery.
0 points: not watery at all.

### [Astringency]

4 points: very astringent.
3 points: quite astringent.
2 points: astringent.
1 point: a little astringent.
0 points: not astringent at all.

Note that the astringency corresponding to a solution formed by dissolving 0.3 g/L tannic acid in water was set to 4 points.

### [Light and Refreshing Aftertaste]

4 points: very good light and refreshing aftertaste
3 points: quite good light and refreshing aftertaste
2 points: good light and refreshing aftertaste
1 point: not very good light and refreshing aftertaste
0 points: very bad light and refreshing aftertaste

### [Comprehensive Evaluation]

4 points: very preferable flavor.
3 points: fairly preferable flavor.
2 points: preferable flavor.
1 point: acceptable flavor.
0 points: unsuitable flavor.

Table 1 presents the evaluation results of adding polydextrose. In addition, Table 2 presents the evaluation results of adding indigestible dextrin.

As presented in Table 1, Compared to Sample 1 containing no polydextrose, Samples 4 to 7 added with 1.0% by mass or more of polydextrose had reduced wateriness, suppressed astringency, and improved light and refreshing aftertaste, thus having a high comprehensive evaluation. Further, in these beverages, the paper odor was hardly increased even when polydextrose was added.

On the other hand, as presented in Table 2, in the case of adding indigestible dextrin, the water odor was solved, but the paper odor became noticeable, and the light and refreshing aftertaste tended to be impaired.

### (Experimental Example 2)

Malt in an amount of 10 kg was added to 200 L of water for saccharification, and the enzyme was inactivated at 76°C. After filtration, the wort was put in a boiling pot, 10 kg of sugar (granulated sugar), 6 kg of dietary fiber, and 200 g of hops were added, and the mixture was boiled and water was added to obtain 250 L of wort. Then, solid-liquid separation was performed in a whirlpool (swirl separation tank). After solid-liquid separation, the wort was cooled with a heat exchanger. After cooling, yeast was added to the wort for fermentation. The liquid after fermentation was clarified by filtration, diluted 1.5 times, and then filled in a container to obtain a fermented malt alcoholic beverage.

Here, polydextrose, indigestible dextrin, or a mixture of polydextrose and indigestible dextrin was used as 6 kg of dietary fiber to obtain beverages according to Samples 15 to 17 having different mixing ratios of polydextrose and indigestible dextrin.

In addition, a beverage according to Sample 14 was obtained by using the same method as that for the beverages according to Samples 15 to 17 except that 6 kg of dietary fiber was not used.

For the beverages according to the obtained Samples 14 to 17, when the concentration of hordatine A and the carbohydrate content were measured, all beverages had a hordatine A concentration of 2 ppm and a carbohydrate content of 0.5% by mass or less. In addition, all the beverages had an alcohol percentage of 6.0% by volume, a raw wort extract of 11.6%, a bitterness value of 18 B.U., and a pH of 4.3.

In addition, sensory evaluation was performed on the beverages according to Samples 14 to 17 as in Experimental Example 1. Table 3 presents the results.

As presented in Table 3, also in the beverages according to Experimental Example 2, compared to the beverage according to Sample 14, the beverages according to Samples 16 and 17 containing polydextrose had reduced wateriness, suppressed astringency, good light and refreshing aftertaste, thus having a good comprehensive evaluation.

**Table 1**

| Sample No. | 1 | 2 | 3 | 4 | 5 | 6 | 7 |
|---|---|---|---|---|---|---|---|
| Amount of Poly dextrose Added (Mass%) | 0 | 0.1 | 0.5 | 1.0 | 1.5 | 1.8 | 2.0 |
| Paper Odor | 0.2 | 0 | 0.2 | 0 | 0.2 | 0.4 | 0.4 |
| Wateriness | 3.0 | 3.0 | 2.6 | 2.0 | 1.0 | 1.0 | 0.4 |
| Astringency | 1.8 | 2.0 | 1.2 | 0.8 | 0.6 | 0.4 | 0.4 |
| Light and Refreshing Aftertaste | 2.4 | 3.5 | 2.8 | 2.8 | 3.0 | 3.2 | 3.2 |
| Comprehensive Evaluation | 2.2 | 3.0 | 2.4 | 3.2 | 3.4 | 3.0 | 2.8 |

**Table 2**

| Sample No. | 8 | 9 | 10 | 11 | 12 | 13 |
|---|---|---|---|---|---|---|
| Amount of Indigestible Dextrin Added (Mass%) | 0.1 | 0.5 | 1.0 | 1.5 | 1.8 | 2.0 |
| Paper Odor | 0.5 | 1.25 | 1.4 | 2.0 | 2.6 | 3.2 |
| Wateriness | 3.5 | 2.5 | 1.6 | 1.2 | 1.0 | 0.4 |
| Astringency | 2.0 | 1.8 | 1.8 | 1.6 | 1.6 | 2.2 |
| Light and Refreshing Aftertaste | 2.5 | 2.0 | 1.6 | 1.8 | 1.2 | 0.6 |
| Comprehensive Evaluation | 2.5 | 2.2 | 2.6 | 2.4 | 1.6 | 1.2 |

**Table 3**

| Sample No. | 14 | 15 | 16 | 17 |
|---|---|---|---|---|
| Ratio of Poly dextrose (%) | 0 | 0 | 80 | 100 |
| Ratio of Indigestible Dextrin (%) | 0 | 100 | 20 | 0 |
| Paper Odor | 0.1 | 3.6 | 1.9 | 1.0 |
| Wateriness | 4.1 | 1.0 | 1.2 | 1.2 |
| Astringency | 3.9 | 3.0 | 1.7 | 1.0 |
| Light and Refreshing Aftertaste | 2.4 | 1.1 | 3.0 | 3.5 |
| Comprehensive Evaluation | 1.9 | 2.2 | 3.1 | 3.5 |

## Claims

1. A fermented malt alcoholic beverage having
a carbohydrate content of 0.5% by mass or less, and comprising
1 ppm or more of hordatine A and
1.0% by mass or more of polydextrose.

2. The beverage according to claim 1, wherein a concentration of the hordatine A is 20 ppm or less.

3. The beverage according to claim 1 or 2, wherein a concentration of the polydextrose is 5% by mass or less.

4. A method for producing a fermented malt alcoholic beverage containing 1 ppm or more of hordatine A, comprising:
preparing and fermenting an aqueous solution of a plant raw material containing malt so that a carbohydrate content is 0.5% by mass or less; and
adding 1.0% by mass or more of polydextrose to the aqueous solution.
